# EUROPEAN PATENT APPLICATION

(11) **EP 4 793 664 A1**
(43) Date of publication of application: **19.08.2026**
(21) Application number: 26158040.1
(22) Date of filing: 12.02.2026
(51) Int. Cl.: G01S 13/89, G01S 7/41, G01S 13/95

(54) **PORTABLE IMAGING SYSTEM AND METHOD THEREOF**

(30) Priority: 14.02.2025 US 202563758572 P
(71) Applicant: National Taipei University of Technology, Taipei 10608 (TW)
(72) Inventor: CHUNG, Ming-An, 10608 Taipei (TW); CHAI, Sung-Yun, 10608 Taipei (TW); HSU, Chia-Chun, 10608 Taipei (TW); HSIEH, Ming-Chun, 10608 Taipei (TW); HUANG, Shang-Jui, 10608 Taipei (TW); CHEN, Kai-Shawn, 10608 Taipei (TW); ZHANG, Jun-Hao, 10608 Taipei (TW); ZHANG, Zhi-Xuan, 10608 Taipei (TW)
(74) Representative: Metida

(57) **Abstract**

A portable imaging system is disclosed by the present disclosure. The portable imaging system comprises an image acquisition module, an imaging module, and a data enhancement module. The image acquisition module is used to perform A-scan on a target to generate a plurality of echo signals, the imaging module is used to obtain A-scan data, a B-scan two-dimensional cross-sectional image, a C-scan plane distribution image and a point cloud; and the data enhancement module is used to enhance the plurality of echo signals. A nondestructive testing method is further disclosed by the present disclosure.

## Description

### CROSS REFERENCE TO RELATED APPLICATIONS

This application claims the benefit of U.S. Provisional Application No. 63/758,572, filed on February 14, 2025, the entirety of which is incorporated by reference herein.

### BACKGROUND OF THE INVENTION

### Field of the Invention

The present disclosure relates to an imaging system and a detection method, and, in particular, to a portable imaging system capable of dynamically adjusting radar transmission power based on terahertz, millimeter wave and optics, and a non-destructive testing method using the portable imaging system.

### Description of the Related Art

Terahertz imaging technologies are detection techniques that utilize electromagnetic waves in a frequency range of 0.1 THz to 10 THz with both electrical and optical properties. Terahertz-based imaging is non-contact and non-destructive. In other word, the material under inspection remains structurally intact. These characteristics confer unique advantages to terahertz imaging in material inspection and image-based analysis.

Terahertz waves can penetrate non-metallic materials such as plastics, fibers, ceramics, and composites, and can be absorbed or reflected by different materials. Furthermore, by reflective imaging and semi-transmissive imaging methods, terahertz imaging technologies can detect internal structures of materials to identify defects such as cracks and damage, as well as analyze properties and structure of materials.

In industries such as railways, aviation, and infrastructure (including cracks of bridges and tunnels), inspections of material and structure are particularly important. For instance, fatigue cracks in aircraft materials can directly affect structural integrity and strength of the aircraft. As a result, aircraft are typically inspected every 750 flight hours. Failure to detect such cracks at an early stage may pose a serious threat to flight safety.

Current industry demands for inspection technologies are primarily focused on high efficiency, high accuracy, and operational convenience. Inspection systems are expected to be capable of detecting a wide range of defects, including delamination, debonding, dents, cracks, holes, water ingress, burns, and lightning strikes.

However, current terahertz imaging systems are large, while many targets to be inspected are large, resulting in a cumbersome and inefficient inspection process. Additionally, terahertz technologies may be limited in certain inspection situations. For example, terahertz technologies are more suitable for thin structures in dent detection, resulting in incomplete or inadequate inspection in thicker or more complex materials.

From the above, the conventional imaging detection systems need to be improved.

### BRIEF SUMMARY OF THE INVENTION

A main purpose of the present disclosure is to provide a portable imaging system to improve speed, accuracy and convenience of inspection of structure.

An embodiment of the present disclosure provides a portable imaging system, including: an image acquisition module, including a radar element configured to perform an A-scan on a target to generate a plurality of echo signals, so as to obtain a plurality of A-scan data of the target, wherein the radar element is selected from the group consisting of a terahertz radar element, a sub-terahertz radar element, and a millimeter wave radar element; an imaging module electrically connected to the image acquisition module, and configured to arrange the plurality of A-scan data into a cross section format to form a B-scan two-dimensional cross-sectional image; to perform a plurality of B-scans on the B-scan two-dimensional cross-sectional image to obtain a plurality of B-scan data; to combine the plurality of B-scan data into a C-scan plane distribution image; and to fuse the B-scan two-dimensional cross-sectional image and the C-scan plane distribution image into a point cloud; and a data enhancement module electrically connected to the image acquisition module, and configured to perform the following steps to enhance the plurality of echo signals, introducing sparsity to an echo data model based on the plurality of echo signals, so as to identify a sparse feature; computing a sparse regularization; adding a total variation constraint; calculating a multiple-constraint to optimize the echo data model; and iteratively solving an optimization problem, so as to generate an image with super resolution.

In an embodiment of the present disclosure, the data enhancement module is further configured to perform a step of: denoising and regularizing the echo data model.

In an embodiment of the present disclosure, the portable imaging system further includes an artificial intelligence module electrically connected to the imaging module and configured to analyze the point cloud.

In an embodiment of the present disclosure, the portable imaging system further includes a defect marking module electrically connected to the imaging module and configured to mark a defect of the target on the point cloud to present a position, a depth and a size of the defect on the target.

In an embodiment of the present disclosure, the portable imaging system further includes a material property establishment module electrically connected to the image acquisition module and configured to perform the following steps to establish information of property of a reference material with a single material: setting a frequency modulated continuous wave radar parameter; setting a sweep frequency range and a frequency step; performing a plurality of frequency sweep measurements on a reference material with a single material by using the radar element; collecting an echo signal from the reference material to obtain a plurality of data; and calculating a key parameter of each one of the plurality of data to obtain reference data of the reference material, wherein the key parameter is selected from the group consisting of loss rate, reflection coefficient, real part and imaginary part of dielectric constant, and generated corresponding frequency spectrum response curve.

In an embodiment of the present disclosure, the portable imaging system further includes a material property analysis module electrically connected to the material property establishment module and configured to perform the following steps to analyze property of a composite material: setting a frequency modulated continuous wave radar parameter; setting a sweep frequency range and a frequency step; performing a plurality of frequency sweep measurements on a composite material; collecting an echo signal from the composite material to obtain a plurality of raw data of the composite material; preprocessing the plurality of data of the composite material, including separating echo signals of a plurality of layers of the composite material and estimating a number and a thickness of the plurality of layers; calculating a key parameter of each one of the plurality of layers of the composite material to obtain a calculation result, wherein the key parameter is selected from the group consisting of loss rate, reflection coefficient, real part and imaginary part of dielectric constant, and generated corresponding frequency spectrum response curve; comparing the calculated result with the reference data of the reference material to determine material property and a thickness of each one of the plurality of layers of the composite material; calibrating the material property and the thickness to obtain calibration data; reconstructing the echo signal of the composite material by using the calibration data to obtain reconstructed data; and comparing the reconstructed data with the plurality of raw data to determine property of the composite material.

In an embodiment of the present disclosure, the portable imaging system further includes a display module electrically connected to the material property analysis module, wherein the display module includes a text display area and an image display area, the text display area is configured to display information of property of the composite material to a user in text form, and the image display area is configured to display information of property of the composite material to the user in image form, wherein the text display area and the image display area synchronously and correspondingly display specific information of property of the composite material.

In an embodiment of the present disclosure, the portable imaging system further comprises a display module electrically connected to the imaging module, wherein the imaging module includes a text display area and an image display area, the text display area is configured to display information of the target to a user in text form, and the image display area is configured to display information of the target to the user in image form, wherein the text display area and the image display area synchronously and correspondingly display specific information of the target.

In an embodiment of the present disclosure, the portable imaging system further comprises a comparison module electrically connected to the imaging module, wherein the comparison module is configured to correspond the point cloud of the target with material property pre-stored in a database to identify the material of the target.

In an embodiment of the present disclosure, the material property is electrical conductivity of the material.

In order to achieve the above purpose, an embodiment of the present disclosure provides a method of nondestructive testing using the portable imaging system as mentioned above comprises the following steps of: performing an A-scan on a target using an image acquisition module, including performing multi-point scanning on the target to generate a plurality of echo signals, so as to obtain a plurality of A-scan data of the target, wherein the radar element is selected from the group consisting of a terahertz radar element, a sub-terahertz radar element, and a millimeter wave radar element; arranging the plurality of A-scan data into a cross section format to form a B-scan two-dimensional cross-sectional image using an imaging module; performing a plurality of B-scans on the B-scan two-dimensional cross-sectional image to obtain a plurality of B-scan data using the imaging module; combining the plurality of B-scan data into a C-scan plane distribution image using the imaging module; fusing the B-scan two-dimensional cross-sectional image and the C-scan plane distribution image into a point cloud using the imaging module; enhancing the plurality of echo signals using a data enhancement module, comprising the following steps of: introducing sparsity to an echo data model based on the plurality of echo signals, so as to identify a sparse feature; computing a sparse regularization; adding a total variation constraint; calculating a multiple constraint to optimize the echo data model; and iteratively solving an optimization problem, so as to generate an image with super resolution.

In an embodiment of the present disclosure, performing the A-scan on the target includes performing a multi-point scan on the target along a line using the radar element to obtain the plurality of A-scan data.

In an embodiment of the present disclosure, enhancing the plurality of echo signals using the data enhancement module further includes a step of: denoising and regularizing the echo data model.

In an embodiment of the present disclosure, the method further includes a step of: analyzing the point cloud using an artificial intelligence module.

In an embodiment of the present disclosure, the method further includes a step of: marking a defect of the target on the point cloud to present specific information of the defect on the target using a defect marking module.

In an embodiment of the present disclosure, the method further comprises a step of: corresponding the point cloud of the target with material property pre-stored in a database to identify the material of the target using a comparison module.

In an embodiment of the present disclosure, wherein the material property is electrical conductivity of the material.

In an embodiment of the present disclosure, the method further includes a step of: establishing information of property of a reference material with a single material using a material property establishment module by performing the following steps: setting a frequency modulated continuous wave radar parameter; setting a sweep frequency range and a frequency step; performing a plurality of frequency sweep measurements on a reference material with a single material by using the radar element; collecting an echo signal from the reference material to obtain a plurality of data; and calculating a key parameter of each one of the plurality of data to obtain reference data of the reference material, wherein the key parameter is selected from the group consisting of loss rate, reflection coefficient, real part and imaginary part of dielectric constant, and generated corresponding frequency spectrum response curve.

In an embodiment of the present disclosure, the method further includes a step of analyzing property of a composite material using a material property analysis module by performing the following steps: setting a frequency modulated continuous wave radar parameter; setting a sweep frequency range and a frequency step; performing a plurality of frequency sweep measurements on a composite material; collecting an echo signal from the composite material to obtain a plurality of raw data of the composite material; preprocessing the plurality of data of the composite material, including separating echo signals of a plurality of layers of the composite material and estimating a number and a thickness of the plurality of layers; calculating a key parameter of each one of the plurality of layers of the composite material to obtain a calculation result, wherein the key parameter is selected from the group consisting of loss rate, reflection coefficient, real part and imaginary part of dielectric constant, and generated corresponding frequency spectrum response curve; comparing the calculated result with the reference data of the reference material to determine material property and a thickness of each one of the plurality of layers of the composite material; calibrating the material property and the thickness to obtain calibration data; reconstructing the echo signal of the composite material by using the calibration data to obtain reconstructed data; and comparing the reconstructed data with the plurality of raw data to determine property of the composite material.

### Benefit effects:

In the portable imaging system of the present disclosure, application time and place are more flexible by the portable structure. Furthermore, a comprehensive inspection view can be provided by stepwise analysis from raw signals (A-scan), to cross-sectional views (B-scan), and ultimately to front-facing images (C-scan), thereby facilitating rapid localization of defects or anomalies. In addition, by adjusting weights of the sparse constraint and the total variation constraint, contour information of the target can be more accurately recovered while the resolution is enhanced. Specifically, resolution is enhanced under noisy conditions, and geometric features of critical scenes are effectively preserved, thereby rendering the portable imaging system of the present disclosure well-suited for various forward-looking radar imaging applications.

### BRIEF DESCRIPTION OF THE DRAWINGS

The present disclosure can be more fully understood by reading the subsequent detailed description and examples with references made to the accompanying drawings, wherein:
FIG. 1 is a block diagram of a portable imaging system according to an embodiment of the present disclosure;
FIG. 2 is a schematic diagram of a display interface of a portable imaging system according to an embodiment of the present disclosure;
FIG. 3 is a flowchart illustrating a method for performing non-destructive testing using the portable imaging system according to an embodiment of the present disclosure; and
FIG. 4 is a flowchart illustrating a method for enhancing echo signals using the portable imaging system according to an embodiment of the present disclosure.

### DETAILED DESCRIPTION OF THE INVENTION

The following description is made for the purpose of illustrating the general principles of the invention and should not be taken in a limiting sense. The scope of the invention is best determined by reference to the appended claims.

As used herein, the singular forms "a", "an" and "the" as used in the description and the appended claims are intended to include the plural forms as well, unless expressly stated otherwise. The term "or" as used in the description and the appended claims is intended to include "and/or", unless expressly stated otherwise.

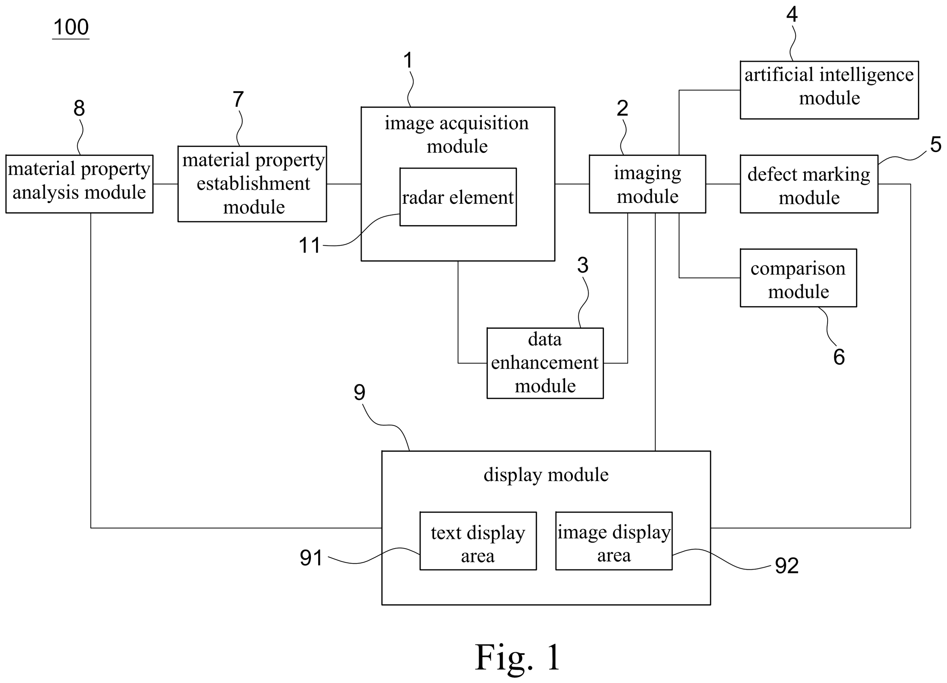

Refer to FIG. 1. A portable imaging system 100 according to an embodiment of the present disclosure includes an image acquisition module 1, an imaging module 2, and a data enhancement module 3.

The image acquisition module 1 includes a radar element 11 configured to perform an A-scan on a target to generate a plurality of echo signals, so as to obtain a plurality of A-scan data of the target. The radar element is selected from the group consisting of a terahertz radar element, a sub-terahertz radar element, and a millimeter wave radar element, and is capable of generating a carrier wave of 30 to 300 GHz. Preferably, the image acquisition module 1 may also include a camera (e.g., Complementary Metal-Oxide-Semiconductor, CMOS). In detail, A-scan is the most fundamental data form, providing single-point signal amplitude and depth information. Further, A-scan is commonly used for rapid thickness measurements, pinpointing localized defects, and conducting preliminary evaluations of internal condition of a material. In addition, since A-scan requires only a small amount of data, A-scan is particularly suitable for real-time testing and providing immediate feedback during inspections.

The imaging module 2 is electrically connected to the image acquisition module 1, and is configured to arrange the plurality of A-scan data into a cross section format to form a B-scan two-dimensional cross-sectional image. Further, a plurality of B-scans on the B-scan two-dimensional cross-sectional image is performed by the imaging module 2, so as to obtain a plurality of B-scan data. Specifically, the B-scan refers to imaging a cross-section along a specified scanning path, allowing visualization of the depth-wise distribution and approximate shape of any detected defects. A more intuitive representation of the internal structural features of the inspection target can be provided by the two-dimensional cross-sectional image, so as to facilitate assessments of size and depth distribution of a defect, particularly suitable for inspection situations requiring higher-resolution internal analysis. The imaging module 2 is further configured to combine multiple B-scan data to a C-scan planar distribution image, and to integrate the two-dimensional B-scan cross-sectional image with the C-scan planar distribution to form a point cloud. Specifically, C-scan provides a defect distribution image across the entire plane and enables a comprehensive scanning of the target. Further, C-scan is suitable for environments requiring large-area inspection and high-level quality control, such as identifying large-scale defects, evaluating material uniformity, and conducting a comprehensive assessment of the internal structural condition of the target under inspection. a global view of the inspection data is provided by the C-scan, facilitating in-depth analysis. In summary, C-scan imaging offers a comprehensive overview of inspection data, facilitating deeper and more precise analysis.

The data enhancement module 3 is electrically connected to the image acquisition module 1, and is configured to perform the following steps to enhance the plurality of echo signals. Sparsity is introduced to an echo data model based on the plurality of echo signals to identify a key sparse feature of the echo data in the echo data model, a redundant signal is eliminated, and edge and structural information of the target is enhanced, thereby improving resolution of forward-looking imaging. A sparse regularization is computed to suppress noise, thereby enhancing stability of the echo data representation. A total variation (TV) constraint is added to smooth a contour of the target, so that edge information is clear, avoiding loss of details due to over-smoothing. A multiple-constraint is calculated to optimize the echo data model. For example, additional mathematical constraints, such as edge preservation and noise suppression, may further be applied to enhance image quality. The split-Bregman algorithm may be utilized to iteratively solve an optimization problem, enabling generation of image with super-resolution by enhancing fine details while preserving edge features. Preferably, the data enhancement module 3 is further configured to perform a step of denoising and regularizing the echo data model. The denoising refers to performing noise suppressing on the echo data model to ensure clarity and accuracy of images, while regularizing involves applying a mathematical constraint to the echo data model to maintain stability and consistency of the data. Optionally, after generating the image with super-resolution, contour and resolution of the image are evaluated. If an evaluated result fails to meet required standards, the sparsity and total variation (TV) weight are further adjusted, and the process is repeated to recalculate the multi-constraint and perform iterative optimization using the split-Bregman algorithm. By the above configuration, not only is the resolution enhanced, but the contour information of the target is also accurately restored.

The portable imaging system 100 may further include an artificial intelligence module 4, a defect marking module 5, a comparison module 6, a material property establishment module 7, a material property analysis module 8, and a display module 9.

The artificial intelligence module 4 is electrically connected to the imaging module 2 and is configured to analyze point cloud for rapidly identifying internal anomalies of the target, such as defects, cracks, and moisture distribution. Preferably, the artificial intelligence module 4 is further configured to automatically classify types of defects, such as cracks and pores, and to provide a quantitative assessment of defect severity. Additionally, the artificial intelligence module 4 may perform statistical analysis based on the inspection results and generate corresponding reports.

The defect marking module 5 is electrically connected to the imaging module 2 and is configured to mark a defect of the target on the point cloud, so as to indicate a location, depth, size of the defect within the target. For example, defect points with color markings may be overlaid on the C-scan by the defect marking module 5 and be presented to a user by the display module 9, thereby showing details such as the location, size, and type of the defect. Furthermore, the target may be reconstructed by the defect marking module 5 using 3D modeling techniques, and information such as the depth and structure of the defect may be dynamically displayed by the display module 9.

The comparison module 6 is electrically connected to the imaging module 2 and is configured to correspond the point cloud of the target to the material properties pre-stored in a database to automatically identify the material and number of layers of the target. Optionally, the material property may be the electrical conductivity. The electrical conductivity of the material may act as a key parameter for distinguishing different materials. Specifically, the electrical conductivity may effectively differentiate metals (e.g., silver, copper, aluminum) from non-metals (e.g., glass, rubber, quartz), thereby facilitating analysis of composite material, detection of internal anomalies thereof, and evaluation of material performance.

The material property establishment module 7 is electrically connected to the image acquisition module 1 and is configured to perform the following steps to establish information of property of a reference material with a single material: A frequency modulated continuous wave (FMCW) radar parameter is set. A sweep frequency range and a frequency step are set, in which the sweep range corresponds to a range set by sweep time. A plurality of frequency sweep measurements on a reference material with a single material are performed by using the radar element. An echo signal from the reference material is collected to obtain a plurality of data. A key parameter of each one of the plurality of data is calculated a to obtain reference data of the reference material, in which the key parameter is selected from the group consisting of loss rate, reflection coefficient, real part and imaginary part of dielectric constant, and generated corresponding frequency spectrum response curve. Preferably, in order to enhance reliability of the data, results from multiple measurements are averaged and integrated, thereby reducing the influence of random noise. In addition, standard deviation of the data is calculated to further verify stability of the measurements. Upon completion of the processing, all analytical results may be stored in a database to form baseline data of the reference material, which can be used for subsequent analysis or matching references.

The material property analysis module 8 is electrically connected to the material property establishment module 7 and is configured to perform the following steps to analyze property of a composite material. A frequency modulated continuous wave radar parameter is set. A sweep frequency range and a frequency step are set. A plurality of frequency sweep measurements on a composite material are performed. An echo signal from the composite material is collected to obtain a plurality of raw data of the composite material. The plurality of data of the composite material are preprocessed, including separating echo signals of a plurality of layers of the composite material and estimating a number and a thickness of the plurality of layers. A key parameter of each one of the plurality of layers of the composite material is calculated to obtain a calculation result, wherein the key parameter is selected from the group consisting of loss rate, reflection coefficient, real part and imaginary part of dielectric constant, and generated corresponding frequency spectrum response curve. The calculated result (i.e., the parameters of each layer) is compared with the reference data of the reference material to determine material property and a thickness of each one of the plurality of layers of the composite material. The material property and the thickness are calibrated to obtain calibration data. The echo signal of the composite material is reconstructed by using the calibration data to obtain reconstructed data. The reconstructed data is compared with the plurality of raw data to determine property of the composite material. It should be noted that if the comparison between the reconstructed data and the plurality of raw data fails to meet the required criteria, the parameters must be readjusted and the entire aforementioned process must be repeated. Conditions under which the required criteria are not met may include, but are not limited to, the following situations:

### Inaccurate Estimation of Layer Quantity or Thickness:

If internal layers of the composite material are not accurately identified during an echo signal separation process, errors may occur in estimating a number of layers or calculating thickness thereof. For example, a system may detect only two layers when three should be present, or the system may mistakenly identify additional, non-existent layers.

### Deviation in Key Parameter Calculation:

When calculating the loss rate, reflection coefficient, or dielectric constant (real and imaginary parts), deviations may arise due to environmental influences or data errors, resulting in significant deviation between the parameters and the reference material data. For instance, a specific layer may be expected to have a certain dielectric constant, but a calculated result shows a significant deviation, indicating possible errors in a measurement or modeling process.

### Mismatch in Frequency Spectrum Response Curve:

The frequency spectral response curve reflects electromagnetic characteristics of a material. A significant deviation between the data of the composite material and the data of the reference material indicates that misidentification of the property of the composite material or inaccurate test data. For example, a significant deviation from a typical response of a given composite material may suggest incorrect material identification.

### Excessive Echo Signal Reconstruction Error:

The reconstructed echo signal using the calibrated data should closely match the measured raw data. A large discrepancy exists between the reconstructed echo signal and the measured raw data may indicate that an analysis model fails to accurately fit characteristics of the material. For instance, a distinct reflection peak present in the raw data is absent in the reconstructed data.

### Measurement Errors or Environmental Interference:

Sweep frequency measurements may be affected by environmental conditions, such as temperature variations, humidity, or electromagnetic interference, resulting in data instability and analysis results that do not accurately reflect property of an actual material.

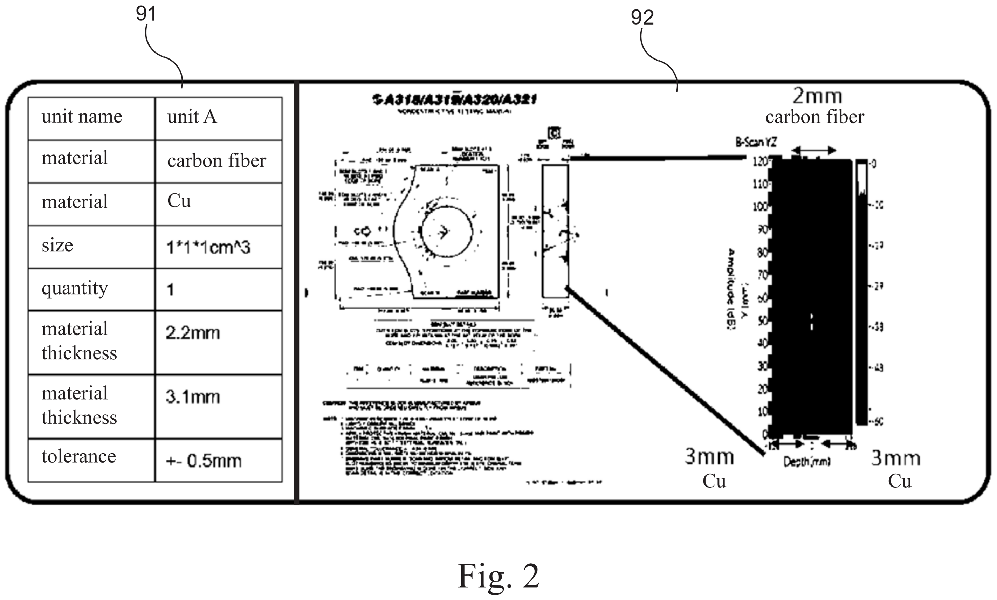

The display module 9 is electrically connected to the imaging module 2 and the material property analysis module 8, and includes a text display area 91 and an image display area 92. The text display area 91 is configured to display information of the target or property of the composite material to a user in text form, and the image display area 92 is configured to display information of the target or the property of the composite material to the user in image form, wherein the text display area 91 and the image display area 92 synchronously and correspondingly display specific information of the target or the property of the composite material. Refer to FIG. 2. Specifically, the display module 9 comprises a display interface for displaying information to the user. The display interface may be divided into the text display area 91 and the image display area 92. For example, information of a composite material (i.e., a component A in FIG. 2), such as name, material, dimensions, and quantity, may be displayed as text in the text display area 91, while the component A may be displayed in graphical form in the image display area 92. Preferably, when a specific information in the text display area 91 is selected, a corresponding part in the image display area 92 can be synchronously linked, for example, by automatically highlighting a corresponding region and displaying relevant information adjacent thereto. For example, when a carbon fiber component of the component A is selected in the text display area 91, a corresponding region representing the carbon fiber in the image display area 92 is highlighted, and an annotation labeled "Carbon Fiber" is displayed above the highlighted area. The aforementioned configuration enhances operational accuracy and efficiency, particularly suitable for mechanical maintenance and inspection situations, thereby reducing significantly human error and improving inspection efficiency.

Optionally, as mentioned above, the display module 9 may further be used to display various types of information to the user, such as A-scan signal graphs, B-scan cross-sectional echo images, C-scan horizontal sectional views, 3D point cloud models, and inspection reports.

Optionally, the display module 9 may further include a function selection and control area, as well as a data analysis area (not shown). The function selection and control area is configured to provide the user with options for switching analysis modes, adjusting power, controlling accessories, and operating measurement functions, etc., and has system flexibility and high operability. The function selection and control area further supports intelligent inspection and manual calibration, thereby improving inspection accuracy. The depth and thermal image ranges may be customized based on specific inspection requirements. The data analysis area is configured to support multi-mode data visualization, including A-scan, B-scan, and C-scan, allowing the presentation of inspection results in different dimensions. The data analysis area is further configured to provide 3D point cloud modeling functionality for reconstructing the three-dimensional structure of the target, and integrates built-in data analysis algorithms and AI-based object recognition technology, to enable rapid defect identification and generation of accurate inspection reports.

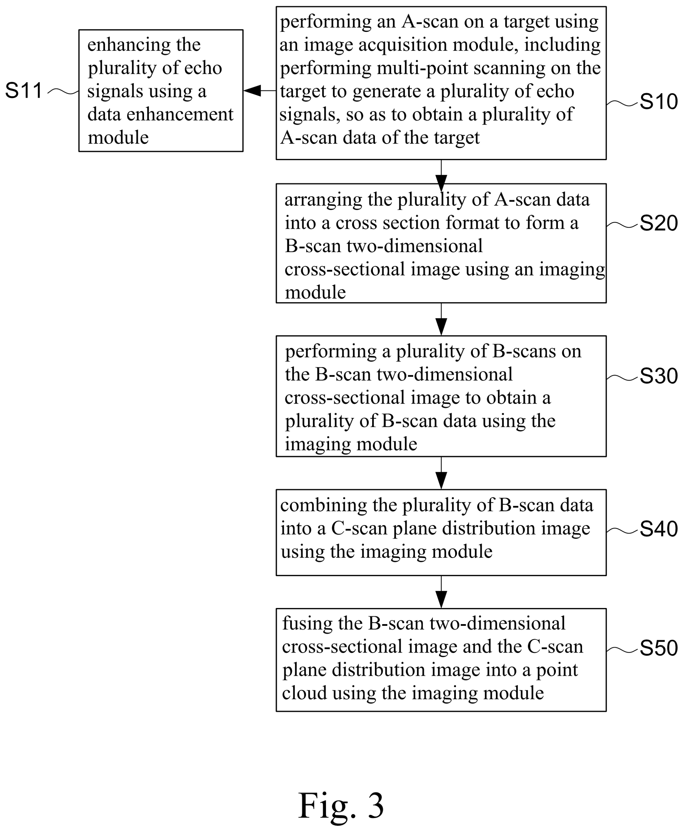

Refer or FIG. 3. According to another embodiment of the present disclosure, a method for performing nondestructive testing using the portable imaging system as mentioned above includes steps of S10-S50, as set forth below.

In step of S10, an A-scan is performed on a target using an image acquisition module. Specifically, in step of S10, multi-point scanning on the target is performed to generate a plurality of echo signals, so as to obtain a plurality of A-scan data of the target, wherein the radar element is selected from the group consisting of a terahertz radar element, a sub-terahertz radar element, and a millimeter wave radar element.

In step of S20, the plurality of A-scan data are arranged into a cross section format to form a B-scan two-dimensional cross-sectional image using an imaging module. Specifically, performing the A-scan on the target includes performing a multi-point scan on the target along a line using the radar element, so as to obtain the plurality of A-scan data.

In step of S30, a plurality of B-scans are performed on the B-scan two-dimensional cross-sectional image using the imaging module, so as to obtain a plurality of B-scan data.

In step of S40, the plurality of B-scan data are combined into a C-scan plane distribution image using the imaging module.

In step of S50, the B-scan two-dimensional cross-sectional image and the C-scan plane distribution image are fused into a point cloud using the imaging module.

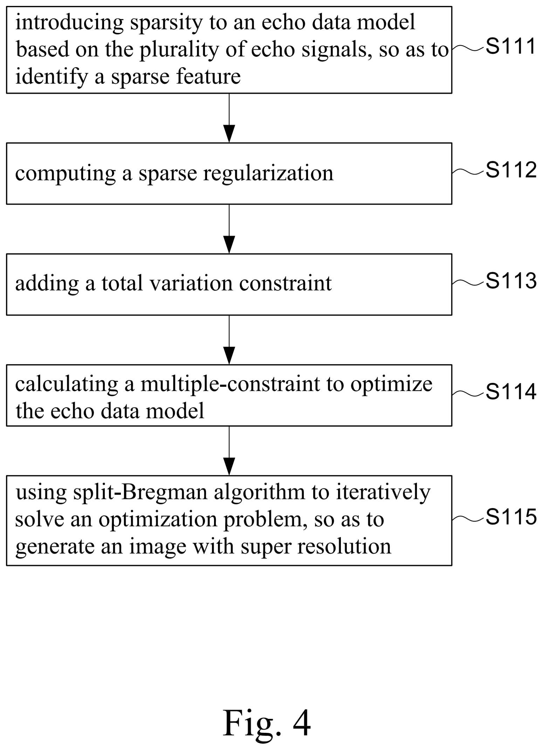

The method further includes a step of S11 of enhancing a plurality of echo signals using a data enhancement module. Refer to FIG. 4. Step of S11 further includes detailed steps of S111-S115, as set forth below.

In step of S111, sparsity is introduced to an echo data model based on the plurality of echo signals, so as to identify a sparse feature.

In step of S112, a sparse regularization is computed.

In step of S113, a total variation constraint is added.

In step of S114, a multiple-constraint is calculated to optimize the echo data model.

In step of S115, using split-Bregman algorithm to iteratively solve an optimization problem, so as to generate an image with super resolution.

Preferably, enhancing the plurality of echo signals using the data enhancement module further includes a step of: denoising and regularizing the echo data model.

Optionally, the method further includes a step of establishing information of property of a reference material with a single material using a material property establishment module by performing the following steps. A frequency modulated continuous wave radar parameter is set. A sweep frequency range and a frequency step are set. A plurality of frequency sweep measurements are performed on a reference material with a single material by using the radar element. An echo signal from the reference material is collected to obtain a plurality of data. A key parameter of each one of the plurality of data is calculated to obtain reference data of the reference material. The key parameter is selected from the group consisting of loss rate, reflection coefficient, real part and imaginary part of dielectric constant, and generated corresponding frequency spectrum response curve.

Optionally, the method further includes a step of analyzing property of a composite material using a material property analysis module by performing the following steps. A frequency modulated continuous wave radar parameter is set. A sweep frequency range and a frequency step are set. A plurality of frequency sweep measurements are performed on a composite material. An echo signal from the composite material is collected to obtain a plurality of raw data of the composite material. The plurality of data of the composite material are preprocessed, including separating echo signals of a plurality of layers of the composite material and estimating a number and a thickness of the plurality of layers. A key parameter of each one of the plurality of layers of the composite material is calculated to obtain a calculation result, wherein the key parameter is selected from the group consisting of loss rate, reflection coefficient, real part and imaginary part of dielectric constant, and generated corresponding frequency spectrum response curve. The calculated result is compared with the reference data of the reference material to determine material property and a thickness of each one of the plurality of layers of the composite material. The material property and the thickness are calibrated to obtain calibration data. The echo signal of the composite material is reconstructed by using the calibration data to obtain reconstructed data. The reconstructed data is compared with the plurality of raw data to determine property of the composite material.

While the invention has been described by way of example and in terms of the preferred embodiments, it should be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A portable imaging system, comprising:
an image acquisition module, including a radar element configured to perform an A-scan on a target to generate a plurality of echo signals, so as to obtain a plurality of A-scan data of the target, wherein the radar element is selected from the group consisting of a terahertz radar element, a sub-terahertz radar element, and a millimeter wave radar element;
an imaging module electrically connected to the image acquisition module,
and configured to arrange the plurality of A-scan data into a cross section format to form a B-scan two-dimensional cross-sectional image; to perform a plurality of B-scans on the B-scan two-dimensional cross-sectional image to obtain a plurality of B-scan data; to combine the plurality of B-scan data into a C-scan plane distribution image; and to fuse the B-scan two-dimensional cross-sectional image and the C-scan plane distribution image into a point cloud; and
a data enhancement module electrically connected to the image acquisition module, and configured to perform the following steps to enhance the plurality of echo signals:
introducing sparsity to an echo data model based on the plurality of echo signals, so as to identify a sparse feature;
computing a sparse regularization;
adding a total variation constraint;
calculating a multiple-constraint to optimize the echo data model; and
iteratively solving an optimization problem, so as to generate an image with super resolution.

2. The portable imaging system as claimed in claim 1, wherein the data enhancement module is further configured to perform a step of: denoising and regularizing the echo data model.

3. The portable imaging system as claimed in claim 1, further comprising an artificial intelligence module electrically connected to the imaging module and configured to analyze the point cloud.

4. The portable imaging system as claimed in claim 1, further comprising a defect marking module electrically connected to the imaging module and configured to mark a defect of the target on the point cloud to present a position, a depth and a size of the defect on the target.

5. The portable imaging system as claimed in claim 1, further comprising a material property establishment module electrically connected to the image acquisition module and configured to perform the following steps to establish information of property of a reference material with a single material:
setting a frequency modulated continuous wave radar parameter;
setting a sweep frequency range and a frequency step;
performing a plurality of frequency sweep measurements on a reference material with a single material by using the radar element;
collecting an echo signal from the reference material to obtain a plurality of data; and
calculating a key parameter of each one of the plurality of data to obtain reference data of the reference material, wherein the key parameter is selected from the group consisting of loss rate, reflection coefficient, real part and imaginary part of dielectric constant, and generated corresponding frequency spectrum response curve.

6. The portable imaging system as claimed in claim 5, further comprising a material property analysis module electrically connected to the material property establishment module and configured to perform the following steps to analyze property of a composite material:
setting a frequency modulated continuous wave radar parameter;
setting a sweep frequency range and a frequency step;
performing a plurality of frequency sweep measurements on a composite material;
collecting an echo signal from the composite material to obtain a plurality of raw data of the composite material;
preprocessing the plurality of data of the composite material, including separating echo signals of a plurality of layers of the composite material and estimating a number and a thickness of the plurality of layers;
calculating a key parameter of each one of the plurality of layers of the composite material to obtain a calculation result, wherein the key parameter is selected from the group consisting of loss rate, reflection coefficient, real part and imaginary part of dielectric constant, and generated corresponding frequency spectrum response curve;
comparing the calculated result with the reference data of the reference material to determine material property and a thickness of each one of the plurality of layers of the composite material;
calibrating the material property and the thickness to obtain calibration data;
reconstructing the echo signal of the composite material by using the calibration data to obtain reconstructed data; and
comparing the reconstructed data with the plurality of raw data to determine property of the composite material.

7. The portable imaging system as claimed in claim 1, further comprising a display module electrically connected to the material property analysis module, wherein the display module includes a text display area and an image display area, the text display area is configured to display information of property of the composite material to a user in text form, and the image display area is configured to display information of property of the composite material to the user in image form, wherein the text display area and the image display area synchronously and correspondingly display specific information of property of the composite material.

8. The portable imaging system as claimed in claim 1, further comprising a display module electrically connected to the imaging module, wherein the imaging module includes a text display area and an image display area, the text display area is configured to display information of the target to a user in text form, and the image display area is configured to display information of the target to the user in image form, wherein the text display area and the image display area synchronously and correspondingly display specific information of the target.

9. The portable imaging system as claimed in claim 1, further comprising a comparison module electrically connected to the imaging module, wherein the comparison module is configured to correspond the point cloud of the target with material property pre-stored in a database to identify the material of the target.

10. A method of nondestructive testing using the portable imaging system of claim 1, comprising the following steps of:
performing an A-scan on a target using an image acquisition module, including performing multi-point scanning on the target to generate a plurality of echo signals, so as to obtain a plurality of A-scan data of the target, wherein the radar element is selected from the group consisting of a terahertz radar element, a sub-terahertz radar element, and a millimeter wave radar element;
arranging the plurality of A-scan data into a cross section format to form a B-scan two-dimensional cross-sectional image using an imaging module;
performing a plurality of B-scans on the B-scan two-dimensional cross-sectional image to obtain a plurality of B-scan data using the imaging module;
combining the plurality of B-scan data into a C-scan plane distribution image using the imaging module;
fusing the B-scan two-dimensional cross-sectional image and the C-scan plane distribution image into a point cloud using the imaging module;
enhancing the plurality of echo signals using a data enhancement module, comprising the following steps of:
introducing sparsity to an echo data model based on the plurality of echo signals,
so as to identify a sparse feature;
computing a sparse regularization;
adding a total variation constraint;
calculating a multiple-constraint to optimize the echo data model; and
iteratively solving an optimization problem, so as to generate an image with super resolution.

11. The method as claimed in claim 10, wherein enhancing the plurality of echo signals using the data enhancement module further includes a step of: denoising and regularizing the echo data model.

12. The method as claimed in claim 10, further comprising a step of: marking a defect of the target on the point cloud to present specific information of the defect on the target using a defect marking module.

13. The method as claimed in claim 10, further comprising a step of: corresponding the point cloud of the target with material property pre-stored in a database to identify the material of the target using a comparison module.

14. The method as claimed in claim 10, further comprising a step of establishing information of property of a reference material with a single material using a material property establishment module by performing the following steps:
setting a frequency modulated continuous wave radar parameter;
setting a sweep frequency range and a frequency step;
performing a plurality of frequency sweep measurements on a reference material with a single material by using the radar element;
collecting an echo signal from the reference material to obtain a plurality of data; and
calculating a key parameter of each one of the plurality of data to obtain reference data of the reference material, wherein the key parameter is selected from the group consisting of loss rate, reflection coefficient, real part and imaginary part of dielectric constant, and generated corresponding frequency spectrum response curve.

15. The method as claimed in claim 10, further comprising a step of analyzing property of a composite material using a material property analysis module by performing the following steps:
setting a frequency modulated continuous wave radar parameter;
setting a sweep frequency range and a frequency step;
performing a plurality of frequency sweep measurements on a composite material;
collecting an echo signal from the composite material to obtain a plurality of raw data of the composite material;
preprocessing the plurality of data of the composite material, including separating echo signals of a plurality of layers of the composite material and estimating a number and a thickness of the plurality of layers;
calculating a key parameter of each one of the plurality of layers of the composite material to obtain a calculation result, wherein the key parameter is selected from the group consisting of loss rate, reflection coefficient, real part and imaginary part of dielectric constant, and generated corresponding frequency spectrum response curve;
comparing the calculated result with the reference data of the reference material to determine material property and a thickness of each one of the plurality of layers of the composite material;
calibrating the material property and the thickness to obtain calibration data;
reconstructing the echo signal of the composite material by using the calibration data to obtain reconstructed data; and
comparing the reconstructed data with the plurality of raw data to determine property of the composite material.
